# EUROPÄISCHE PATENTSCHRIFT

(11) **EP 2 301 099 B1**
(45) Veröffentlichungstag und Bekanntmachung des Hinweises auf die Patenterteilung: **12.08.2015**
(21) Anmeldenummer: 09765592.2
(22) Anmeldetag: 15.06.2009
(51) Int. Cl.: H01M 6/50, H01M 8/04, H01M 10/613, H01M 10/6555, H01M 10/6556, H01M 10/6568, H01M 10/6569, F28F 3/02, F28F 3/12, H01G 9/00, H01M 10/625, H01M 10/647, H01M 10/663

(54) **VORRICHTUNG ZUR KÜHLUNG EINER FAHRZEUGBATTERIE**
DEVICE FOR COOLING A VEHICLE BATTERY
DISPOSITIF POUR LE REFROIDISSEMENT D'UNE BATTERIE DE VÉHICULE

(30) Priorität: 17.06.2008 DE 102008028400
(43) Veröffentlichungstag der Anmeldung: 30.03.2011
(73) Patentinhaber: MAHLE Behr GmbH & Co. KG, 70469 Stuttgart (DE)
(72) Erfinder: SCHMID, Caroline, 70186 Stuttgart (DE); ISERMEYER, Tobias, 74245 Löwenstein (DE); KOHLBERGER, Markus, 70174 Stuttgart (DE); MOLDOVAN, Florin, 70569 Stuttgart (DE); SCHIEHLEN, Thomas, 89174 Altheim (DE); DAMSOHN, Herbert, 73773 Aichwald (DE); STEINBACH, Martin, 71336 Waiblingen (DE); HERRMANN, Hans-Georg, 70619 Stuttgart (DE); ECKSTEIN, Jürgen, 71409 Schwaikheim (DE)
(74) Vertreter: Grauel, Andreas
(86) Internationale Anmeldenummer: PCT/EP2009/004292
(87) Internationale Veröffentlichungsnummer: WO 2009/153012

(56) Entgegenhaltungen:
- EP-A- 1 271 085
- EP-A- 1 835 251
- GB-A- 776 240
- JP-A- 2007 273 774
- US-A- 4 947 287
- US-A1- 2006 216 582

## Beschreibung

Die Erfindung betrifft eine Vorrichtung zur Kühlung einer Fahrzeugbatterie nach dem Oberbegriff des Anspruchs 1.

Die Kühlung von elektrischen Energiespeichern von modernen Kraftfahrzeugen stellt besondere Anforderungen aufgrund der teilweise hohen Leistungsdichte. Solche Energiespeicher können unter anderem als Fahrbatterien von Elektro- oder Hybridfahrzeugen eingesetzt werden. Es kann sich um Lithium-Ionen-Batterien, Supercaps, Brennstoffzellen, herkömmliche Akkumulatoren oder Kombinationen aus solchen Elementen handeln. Es sind eine Reihe von Vorschlägen zur effizienten Kühlung solcher Bauteile bekannt, die aber oft nur aufwendig oder kostspielig herstellbar sind oder in ihrer Leistung beschränkt.

Die US 4 947 287 offenbart eine Kühlvorrichtung mit Kühlkörper und Kühlelementen.

Es ist die Aufgabe der Erfindung, eine Vorrichtung zur Kühlung einer Fahrzeugbatterie anzugeben, die einfach und kostengünstig herstellbar ist und eine effektive und betriebssichere Kühlung bereitstellt.

Diese Aufgabe wird für eine eingangs genannte Vorrichtung erfindungsgemäß mit den kennzeichnenden Merkmalen des Anspruchs 1 gelöst. Durch die flächige, mechanische Verbindung ist ein guter thermischer Kontakt gegeben, was bei zum Beispiel einer ausschließlichen Verklebung der Kühlbleche mit dem Kühlkörper nur schwer erreichbar ist. Unter dem Kühlkörper im Sinne der Erfindung wird in bevorzugter Ausführung ein fluiddurchströmter, im Wesentlichen plattenförmiger Körper verstanden, wobei das Fluid ein flüssiges Kühlmittel eines Kohlkreislaufs oder auch ein im Kühlkörper verdampfendes Kältemittel z.B. einer Fahrzeug-Klimaanlage sein kann. Auch eine mehrflutlge Auslegung des Kühlkörpers mit einer Kühlmittelflut und einer Kältemittelflut ist denkbar, um in sämtlichen Betriebssituationen eine ausreichende Kühlleistung bereitstellen zu können.

In bevorzugter Weiterbildung ist die mechanische Verbindung so gestaltet, dass das Kühlblech nach einer Verbindung mit dem elektrischen Element an dem Kühlkörper festlegbar ist Hierdurch können die Herstellungsschritte sinnvoll separiert und besser automatisiert werden. Die Verbindung der elektrischen Elemente mit dem Kühlblech kann dabei zum Beispiel mittels Verklebung, klemmender Halterung oder anderer Maßnahmen erfolgen. Insbesondere kann es sich bei den elektrischen Elementen um Lithium-IonenBatterien in flacher Bauweise ohne eigensteife Hülse ("Coffee-Bags") handeln.

Zur Sicherstellung einer ausreichenden mechanischen Steifigkeit und thermischen Leitfähigkeit hat das Kühlblech bevorzugt eine Dicke zwischen etwa 0,2 mm und etwa 2 mm. Je nach Anforderungen kann das Kühlblech eine Mehrzahl von Blechlagen umfassen, wodurch zum einen eine gute Biegbarkeit bei zugleich ausreichendem Gesamtquerschnitt erzielbar ist. Allgemein bevorzugt bestehen die Kühlbleche aus einem gut wärmeleitfähigen und zugleich formbaren Material wie etwa Aluminium, Kupfer oder kupferbeschichtetes Aluminium.

Bei einer bevorzugten Ausführungsform der Erfindung hat der Kühlkörper eine Durchbrechung, wobei das Kühlblech die Durchbrechung zumindest teilweise durchgreift. Besonders bevorzugt Ist dabei vorgesehen, dass ein über die dem elektrischen Element gegenüberliegende Seite des Kühlkörpers überstehender Teil des Kühlblechs zur mechanischen, insbesondere kraftschlüssigen und/oder reibschlüssigen und/ oder formschlüssigen Verbindung mit dem Kühlkörper deformiert ist. Durch die Festlegung mittels Deformation des Kühlblechs lässt sich ein guter thermischer Kontakt bei zugleich dauerhaft sicherer Festlegung an dem Kühlkörper erzielen.

Bei einer bevorzugten Variante des Ausführungsbeispiels erfolgt die mechanische Verbindung mit einem an dem Kühlkörper angeordneten Blechteil, insbesondere mittels gemeinsamer Umformung von Kühlblech und Blechteil. Dabei kann das Blechteil (oder die mehreren Blechteile) insbesondere im Zuge der Herstellung des Kühlkörpers zum Beispiel mittels flächiger Verlötung angebracht werden, wodurch Blechteil und Kühlkörper sicher und in besonders gutem thermischen Kontakt verbunden sind.

Bevorzugt wird im Interesse einer guten Wärmeableitung der überstehende Teil des Kühlblechs unmittelbar an den Kühlkörper angeformt.

Bei einer besonders bevorzugten Detailgestaltung weist die Durchbrechung des Kühlkörpers eine Schlitzform mit einem erweiterten Zentralbereich auf. Der Zentralbereich kann zum Beispiel einen runden Querschnitt mit insbesondere konischen Flanken haben, so dass durch eine Anformung des Kühlblechs an diesen Bereich der Durchbrechung eine Art Halbschalen-Hohlniet entsteht, dessen mechanische Festigkeit und thermische Anbindung besonders groß ist.

Bei dem erfindungsgemäßen Ausführungsbeispiel hat das Kühlblech an seinem zu dem Kühlkörper gerichteten Ende eine sich in flachem Winkel verjüngende Ausformung, wobei die Ausformung insbesondere reibschlüssig in eine korrespondierende Ausnehmung des Kühlkörpers eingreift. In bevorzugter Detailgestaltung beträgt ein Öffnungswinkel der Ausformung des Kühlblechs zwischen etwa 3° und etwa 9°, insbesondere zwischen etwa 5° und etwa 7°. Bei einer solchen Festlegung erfolgt die Halterung weitgehend reibschlüssig, wobei der gewählte Öffnungswinkel im Bereich des selbsthemmenden Reibungswinkels der Materialpaarung liegt. Neben einer großen Kontaktfläche bietet sich dabei auch der Vorteil, dass die Ausnehmung den Kühlkörper nicht vollständig durchgreift bzw. als Durchbrechung ausgeformt sein muss.

Bei einem weiteren Ausführungsbeispiel der Erfindung ist das Kühlblech über zumindest einen Niet mit dem Kühlkörper verbunden. Eine Vernietung bietet sich ebenfalls als besonders geeignet zur Erlangung einer flächigen, kraftbeaufschlagten Anlage von Kühlblech und Kühlkörper an. Bei einer ersten Detailgestaltung besteht der Niet dabei kostengünstig und einfach verarbeitbar aus Kunststoff. Insbesondere können dabei mehrere der Niete einstückig an einer Kunststoffschiene ausgebildet sein, wodurch die Montage weiter vereinfacht und automatisiert werden kann. Eine Umformung der Kunststoff-Nietköpfe kann durch Warmverstemmen, Ultraschall-Schweißen oder andere thermomechanische Umformverfahren erfolgen. Bei einer ergänzenden oder alternativen Abwandlung besteht der Niet aus Metall und ist insbesondere als Blindniet ausgebildet. Durch Metallniete kann eine besonders große Andruckkraft von Kühlblech und Kühlkörper und somit ein besonders guter thermischer Kontakt erzielt werden.

Bei einer weiteren Ausführungsform der Erfindung ist in dem Kühlkörper eine Nut und an dem Kühlblech eine zu der Nut korrespondierende Ausformung vorgesehen, wobei das Kühlblech mittels der Ausformung formschlüssig in die Nut einsetzbar ist. Hierdurch lässt sich ein Formschluss in zumindest zwei Raumrichtungen erzielen, wobei zudem große Kontaktflächen innerhalb der Nut möglich sind. Je nach Anforderungen kann, insbesondere zur Sicherung einer Verschiebung in Richtung der Nut, eine zusätzliche Festlegung durch Klebstoff oder durch federnde Klemmung vorliegen.

Bei einem weiteren Ausführungsbeispiel der Erfindung ist es vorgesehen, dass das Kühlblech über ein Klemmglied gegen den Kühlkörper kraftbeaufschlagt gehalten ist, wodurch auf einfache Weise ein guter thermischer Kontakt erzielt wird. In bevorzugter Weiterbildung ist dabei das Klemmglied an einem mit dem Kühlkörper verbundenen Rahmenkorb abgestützt, wobei insbesondere mehrere Kühlbleche in dem Rahmenkorb angeordnet sind. Hierdurch kann die Montage weiter vereinfacht und automatisiert werden.

Vorteilhaft ist, dass ein Öffnungswinkel der Ausformung des Kühlblechs zwischen etwa 3° und etwa 9°, insbesondere zwischen etwa 5° und etwa 7°, beträgt.

Vorteilhaft ist, dass der Niet aus Kunststoff besteht.

Vorteilhaft ist, dass mehrere der Niete einstückig an einer Kunststoffschiene ausgebildet sind.

Vorteilhaft ist, dass der Niet aus Metall besteht und insbesondere als Blindniet ausgebildet ist.

Weitere Vorteile und Merkmale der Erfindung ergeben sich aus den nachfolgend beschriebenen Ausführungsbeispielen sowie aus den abhängigen Ansprüchen.

Nachfolgend werden mehrere Ausführungsbeispiele der Erfindung beschrieben und anhand der anliegenden Zeichnungen näher erläutert.
- Fig. 1: zeigt eine Detailansicht eines den Kühlkörper durchgreifenden Kühlblechs.
- Fig. 2: zeigt eine Draufsicht von unten vor und nach einem teilweisen Umformen des Kühlblechs.
- Fig. 3: zeigt die Vorrichtung aus Fig. 2 in zwei Schnittebenen entlang der Linien A-A und 8-8.
- Fig. 4: zeigt eine weitere Draufsicht von unten auf die Vorrichtung aus Fig. 2 nach einem vollständigen Umformen des Kühlblechs.
- Fig. 5: zeigt ein weiteres Beispiel mit einer Vernietung von Kühlblech und Kühlkörper.
- Fig. 6: zeigt eine Abwandlung des Ausführungsbeispiels aus Fig. 5.
- Fig. 7: zeigt eine weitere Abwandlung des Beispiels gemäß Fig. 5.
- Fig. 8: zeigt ein weiteres Beispiel unter Verwendung formschlüssiger Nuten.
- Fig. 9: zeigt ein Kühlblech eines Ausführungsbeispiels mit konischen Ausformungen.
- Fig. 10: zeigt eine schematische Schnittansicht durch das an einem Kühlkörper festgelegte Kühlblech aus Fig. 9.
- Fig. 11: zeigt eine Schnittansicht eines Kühlblechs eines weiteren Bespiels.
- Fig. 12: zeigt ein das Beispiel aus Fig. 11 mit über ein Klemmglied an dem Kühlkörper festgelegtem Kohlblech.
- Fig. 13: zeigt eine räumliche Ansicht des Beispiels aus Fig. 12 in einem teilweise montierten Zustand ohne Klemmglied.

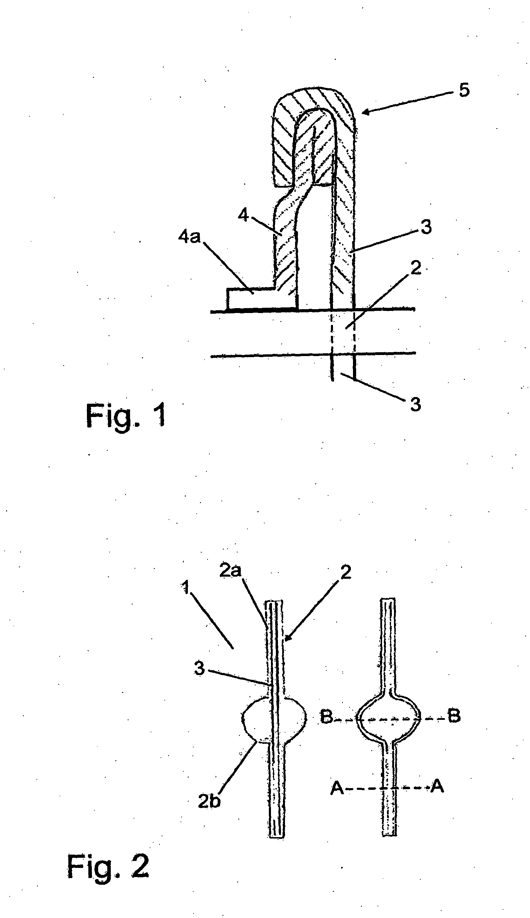

Bei dem in Fig. 1 gezeigten ersten Beispiel weist ein flulddurchströmter Kühlkörper 1 eine Mehrzahl von schlitzförmigen Durchbrechungen 2 auf, durch die jeweils ein Kühlblech 3 gesteckt ist. An dem Kühlblech 3 sind jeweils eine oder mehrere Lithium-Ionen-Batterien der Coffee-Bag-Bauweise durch Verklebung festgelegt (nicht dargestellt). Der die Durchbrechung 2 durchgreifende Teil steht auf der anderen (in der Zeichnungen oberen) Seite des Kühlkörper über und ist dort mit einem Blechteil 4 durch Umbördelung bzw. Vertalzung 5 verbunden. Das Blechteil 4 hat einen flächigen, umgebogenen Ansatz 4a, mittels dessen es flächig mit dem Kühlkörper verlötet ist.

Durch die gemeinsame Umformung von Kühlblech 3 und Blechteil 4 wird eine kraft-, reib- und formschlüssige Verbindung geschaffen, die eine gute thermische Leitfähigkeit aufweist. Gegebenenfalls können zusätzlich Abschnitte des Kühlblechs 3 nach Art von Füßen umgebogen sein und auf der gemäß Fig. 1 unteren Seite des Kühlkörpers flächig anliegen.

Fig. 2 zeigt eine weitere Möglichkeit, ein durch eine Durchbrechung 2 des Kühlkörpers 1 gestecktes Kühlblech durch Umformung festzulegen.

Hierzu hat die Durchbrechung seitliche schlitzförmige Abschnitte 2a und einen zentralen, im Wesentlichen kreisförmigen Abschnitt 2b von größerer Breite. Das Kühlblech ist in seinem durch den Kühlkörper gesteckten Endbereich in drei Segmente 3a, 3b, 3c geteilt, wobei die seitlichen Segmente 3a, 3c um etwa 90 Grad umgelascht werden und nicht durch die schlitzförmigen Teile 2a der Durchbrechung 2 gesteckt sind, sondern das Kühlblech flächig gegen den Kühlkörper abstützen. Das mittlere, durch die Durchbrechung 2 gesteckte Segment 3b wird nach Art eines Halbschalen-Hohlniets an den Zentralbereich der Durchbrechung 2b angeformt. Überstände des den schlitzförmigen Teil 2a durchgreifenden Segments werden umgelascht.

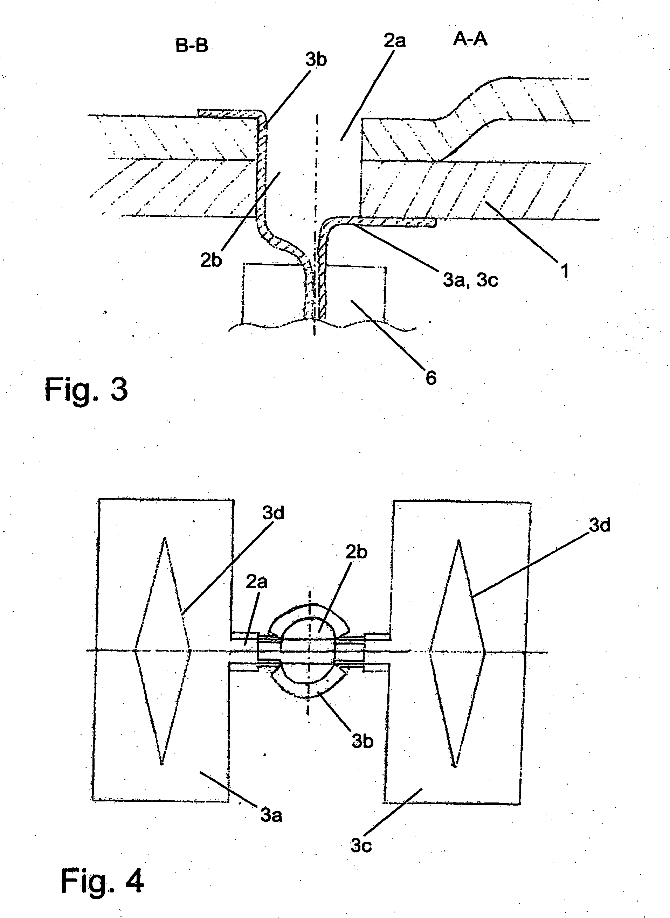

Bei der Schnittansicht nach Fig. 3 sind auf der linken Seite und der rechten Seite verschiedene Schnittebenen zur Veranschaulichung dargestellt. Zudem sind endseitige Bereiche der auf das Kühlblech 3 aufgeklebten Lithium-Ionen-Zellen 6 sichtbar.

Die Draufsicht von unten gemäß Fig. 4 zeigt aus Gründen der Veranschaulichung auch die an der gegenüberliegenden Seite des plattenförmigen Kühlkörpers abgestützen Segmente 3a, 3c, die eigentlich nicht sichtbar wären. Die Segmente 3a, 3c sind zudem mit Sicken 3d zur Verstärkung versehen. In dem Ausführungsbeispiel sind jeweils zwei Kühlbleche in der gleichen Durchbrechung 2 eingebracht, wobei es sich je nach Anforderungen auch um zwei Blechlagen des gleichen Kühlblechs handeln kann. Bei seinem aus mehreren Lagen ausgebildeten Kühlblech können die Lagen an ihrem anderen Ende ähnlich dem Verbindungsbereich 5 in Fig. 1 miteinander verbunden sein.

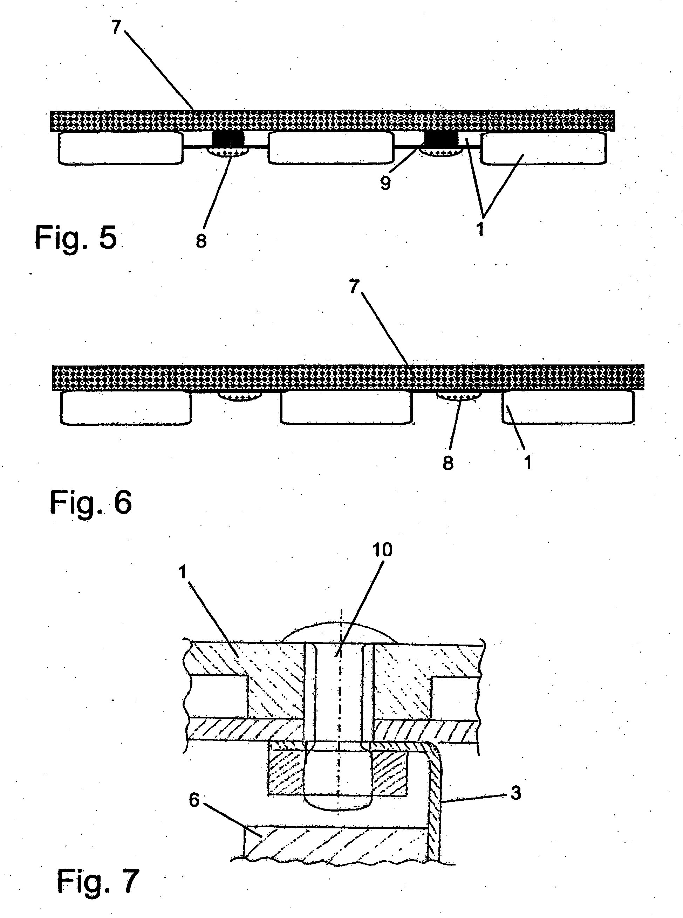

Bei der Ausführungsform nach Fig. 5 wird an das Kühlblech (nicht dargestellt) eine Kunststoffschiene 7 angebracht, zum Beispiel mittels festcilpsen, kleben oder umspritzen. Die Kunststoffschiene 7 hat mehrere vorragende Stifte bzw. Niete 8, die durch Durchbrechungen 9 des Kühlkörpers 1 gesteckt und anschließend zu Nietköpfen umgeformt werden. Die Umformung kann durch Warmverstemmung oder andere geeignete Maßnahmen erfolgen.

Der Kühlkörper 1 weist Flachrohre 1 a auf, in denen Kältemittel oder ein Kühlmittel strömt. Zur weiteren Verstärkung sind die Niete in Verstärkungelementen 9 geführt.

Fig. 6 zeigt eine Abwandlung der Ausführungsform aus Fig. 5, bei der keine Verstärkungselemente vorgesehen sind.

Fig. 7 zeigt eine weitere Variante der Vernietung von Kühlblech 3 und Kühlkörper 1, bei der ein metallischer Blindniet von der den elektrischen Elementen abgewandten Seite durch Durchbrechungen in Kühlkörper 1 und einer an dem Kühlkörper 1 anliegenden Lasche des Kühlblech 3 gesteckt und dann umgeformt wird. Diese Befestigung ist besonders bei engen Bauweisen vorteilhaft, wie zum Beispiel vorliegend durch die den Niet 10 übergreifenden elektrischen Elemente 6 gegeben.

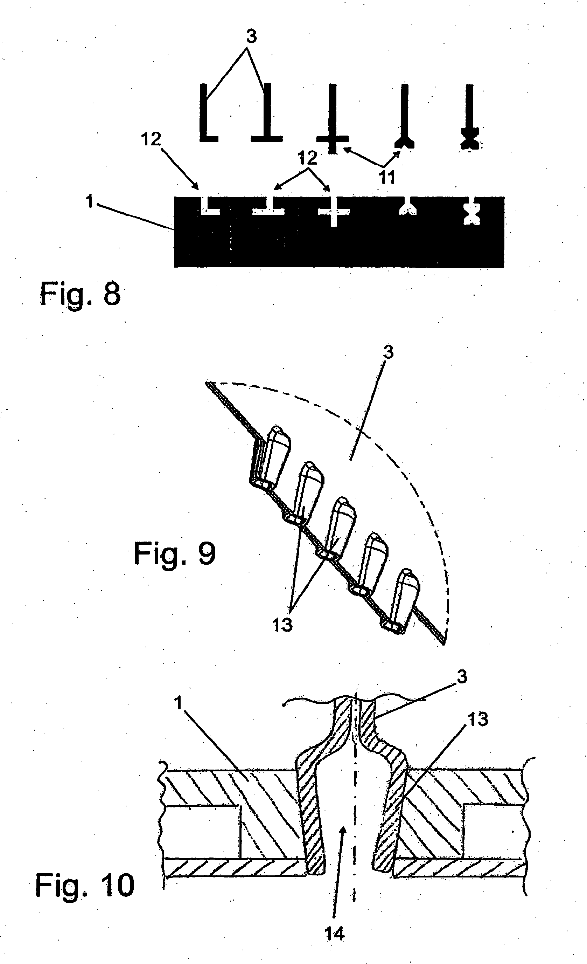

Fig. 8 zeigt schematisch ein Beispiel, bei dem eine endseitige Ausformung 11 des Kühlblechs 3 in eine korrespondierende Nut 12 des Kühlkörpers 1 formschlüssig eingeschoben wird. Falls eine Reibung oder durch Formgebung erzielte Federspannung nicht zur Festlegung in der Einschubrichtung ausreichend ist, kann zusätzlich eine Verklebung oder auch Umlaschung endseitig überstehender Blechteile erfolgen.

Fig. 9 und Fig. 10 zeigen ein Ausführungsbeispiel, bei dem endseitig des Kühlblechs 3 sich in flachem Winkel von etwa 6° verjüngende Ausformungen nach Art von Zungen 13 vorgesehen sind, die in korrespondierende, konische Ausnehmungen 14 des Kühlkörpers 1 eingesetzt sind. Die Ausnehmüngen 14 können sackförmig oder auch als Durchbrechungen (siehe Fig. 10) vorliegen. Durch geeignete Wahl des Konuswinkels kann eine dauerhafte reibschlüssige Festlegung bei gutem flächigem Kontakt erzielt werden. Eine zusätzliche Sicherung kann durch nachträgliches Aufbringen von Klebstoff erfolgen oder auch durch zusätzliche Verrastung bei geeigneter Formgebung der Zungen 13.

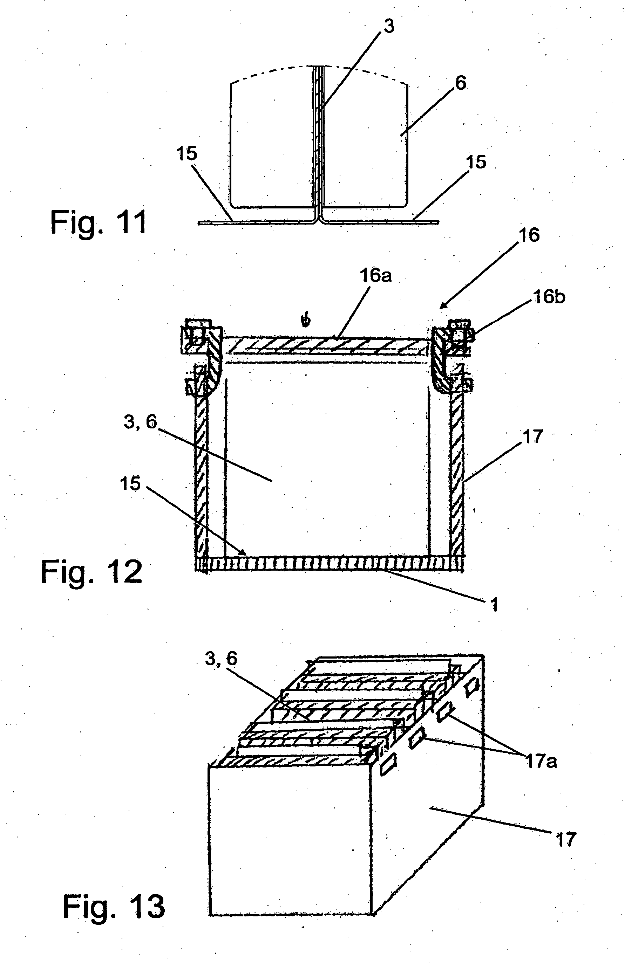

Fig. 11 bits Fig. 13 zeigen ein weiteres Beispiel, bei dem das Kühlblech 3 endseitig durch Umbiegung zu flächigen Füßen 15 ausgeformt ist, die auf der Oberfläche des Kühlkörpers 1 aufliegen. An dem gegenüberliegenden Ende werden die Kühlbleche 3 durch ein Klemmglied 16 nach Art eines geraden, das Kühlblech durchgehend übergreifenden Bügels bzw. einer Druckplatte 16a mit seitlich eingehakten, federelastischen Verbindungsgliedern.16b gehalten und gegen den Kühlkörper 1 gedrückt.

Die Verbindungsglieder 16b sind einerseits mit den Bügeln 16a verbunden und andererseits in Ausnehmungen 17a eines Rahmenkorbs 17 vorgespannt eingehängt. Der Rahmenkorb 17 umfängt mehrere der Kühlbleche 3 und ist fest mit dem Kühlkörper 1 verbunden, was zum Beispiel im Zuge der Herstellung des Kühlkörpers 1 durch Verlötung erfolgen kann.

Es versteht sich, dass die einzelnen Merkmale der verschiedenen Ausführungsbeispiele je nach Anforderungen sinnvoll miteinander kombiniert werden können.

## Patentansprüche

1. Vorrichtung zur Kühlung einer Fahrzeugbatterie, umfassend eine Mehrzahl von elektrischen Speicherelementen (6), und
einen von einem kühlenden Fluid durchströmbaren Kühlkörper (1),
wobei zumindest eines der elektrischen Speicherelemente (6) jeweils an zumindest einem Kühlblech (3) in thermischem Kontakt festgelegt ist, und wobei das Kühlblech (3) zur Übertragung von Wärme des Speicherelements (6) an das Fluid mit dem Kühlkörper (1) verbunden ist, wobei das Kühlblech (3) eine flächige, mechanische Verbindung mit dem Kühlkörper (1) aufweist, **dadurch gekennzeichnet, dass** das Kühlblech (3) an seinem zu dem Kühlkörper (1) gerichteten Ende eine sich in flachem Winkel verjüngende Ausformung (13) aufweist, wobei die Ausformung insbesondere reibschlüssig in eine korrespondierende Ausnehmung (14) des Kühlkörpers (1) eingreift.

2. Vorrichtung nach Anspruch 1, **dadurch gekennzeichnet, dass** das Kühlblech (3) nach einer Verbindung mit dem elektrischen Element (6) an dem Kühlkörper (1) festlegbar ist.

3. Vorrichtung nach einem der vorhergehenden Ansprüche, **dadurch gekennzeichnet, dass** das Kühlblech (3) eine Dicke zwischen etwa 0,2 mm und etwa 2 mm aufweist.

4. Vorrichtung nach einem der vorhergehenden Ansprüche, **dadurch gekennzeichnet, dass** das Kühlblech (3) eine Mehrzahl von Blechlagen umfasst.

5. Vorrichtung nach einem der vorhergehenden Ansprüche, **dadurch gekennzeichnet, dass** der Kühlkörper (1) eine Durchbrechung (2) aufweist, wobei das Kühlblech (3) die Durchbrechung (2) zumindest teilweise durchgreift.

6. Vorrichtung nach Anspruch 5, **dadurch gekennzeichnet, dass** ein über die dem elektrischen Element (6) gegenüberliegende Seite des Kühlkörpers (1) überstehender Teil des Kühlblechs (3) zur mechanischen, insbesondere kraftschlüssigen und/oder reibschlüssigen und/ oder formschlüssigen Verbindung mit dem Kühlkörper deformiert ist.

7. Vorrichtung nach Anspruch 6, **dadurch gekennzeichnet, dass** die mechanische Verbindung mit einem an dem Kühlkörper (1) angeordneten Blechteil (4) erfolgt, insbesondere mittels gemeinsamer Umformung von Kühlblech (3) und Blechteil (4).

8. Vorrichtung nach Anspruch 6, **dadurch gekennzeichnet, dass** der überstehende Teil des Kühlblechs (3) unmittelbar an den Kühlkörper (1) angeformt wird.

9. Vorrichtung nach Anspruch 8, **dadurch gekennzeichnet, dass** die Durchbrechung des Kühlkörpers (1) eine Schlitzform (2a) mit einem erweiterten Zentralbereich (2b) aufweist.

10. Vorrichtung nach Anspruch 1, **dadurch gekennzeichnet, dass** ein Öffnungswinkel der Ausformung (13) des Kühlblechs (3) zwischen etwa 3° und etwa 9°, insbesondere zwischen etwa 5° und etwa 7°, beträgt.

11. Vorrichtung nach einem der vorhergehenden Ansprüche, **dadurch gekennzeichnet, dass** das Kühlblech (3) über zumindest einen Niet (8, 10) mit dem Kühlkörper (1) verbunden ist.

12. Vorrichtung nach Anspruch.11, **dadurch gekennzeichnet, dass** der Niet (8) aus Kunststoff besteht.

13. Vorrichtung nach Anspruch 12, **dadurch gekennzeichnet, dass** mehrere der Niete einstückig an einer Kunststoffschiene (7) ausgebildet sind.

14. Vorrichtung nach Anspruch 11, **dadurch gekennzeichnet, dass** der Niet (10) aus Metall besteht und insbesondere als Blindniet ausgebildet ist.

15. Vorrichtung nach einem der vorhergehenden Ansprüche, **dadurch gekennzeichnet, dass** an dem Kühlkörper (1) eine Nut (12) und an dem Kühlblech eine zu der Nut korrespondierende Ausformung (11) vorgesehen ist, wobei das Kühlblech (3) mittels der Ausformung (11) formschlüssig in die Nut (12) einsetzbar ist.

16. Vorrichtung nach Anspruch 15, **dadurch gekennzeichnet, dass** eine zusätzliche Festlegung durch Klebstoff oder durch federnde Klemmung vorliegt.

17. Vorrichtung nach einem der vorhergehenden Ansprüche, **dadurch gekennzeichnet, dass** das Kühlblech über ein Klemmglied (16) gegen den Kühlkörper kraftbeaufschlagt gehalten ist.

18. Vorrichtung nach Anspruch 17, **dadurch gekennzeichnet, dass** das Klemmglied (16) an einem mit dem Kühlkörper verbundenen Rahmenkorb (17) abgestützt ist, wobei insbesondere mehrere Kühlbleche (3) in dem Rahmenkorb (17) angeordnet sind.

## Claims

1. Device for cooling a vehicle battery, comprising a plurality of electrical storage elements (6) and a cooling element (1) through which a cooling fluid can flow, wherein at least one of the electrical storage elements (6) is attached to at least one cooling plate (3) in thermal contact, and wherein the cooling plate (3) is connected to the cooling element (1) in order to transmit heat from the storage element (6) to the fluid, wherein the cooling plate (3) has a full-area mechanical connection to the cooling element (1), **characterized in that** the cooling plate (3) has, at its end facing the cooling element (1), a formation (13) tapering in a shallow angle, wherein the formation engages in a corresponding recess (14) of the cooling element (1), in particular frictionally.

2. Device according to claim 1, **characterized in that** the cooling plate (3) can be attached to the cooling element (1) after connection to the electrical element (6).

3. Device according to one of the preceding claims, **characterized in that** the cooling plate (3) has a thickness between approximately 0.2 mm and approximately 2 mm.

4. Device according to one of the preceding claims, **characterized in that** the cooling plate (3) comprises a plurality of sheet-metal layers.

5. Device according to one of the preceding claims, **characterized in that** the cooling element (1) has an opening (2), wherein the cooling plate (3) extends at least partway through the opening (2).

6. Device according to claim 5, **characterized in that** a part of the cooling plate (3) that projects beyond the side of the cooling element (1) opposite the electrical element (6) is deformed for mechanical connection, in particular force-fitting and/or frictional and/or interlocking connection, with the cooling element.

7. Device according to claim 6, **characterized in that** the mechanical connection is accomplished with a sheet-metal part (4) arranged on the cooling element (1), in particular by forming the cooling plate (3) and the sheet-metal part (4) together.

8. Device according to claim 6, **characterized in that** the projecting part of the cooling plate (3) is formed directly onto the cooling element (1).

9. Device according to claim 8, **characterized in that** the opening of the cooling element (1) has the form of a slot (2a) with an enlarged central region (2b).

10. Device according to claim 1, **characterized in that** an opening angle of the formation (13) on the cooling plate (3) is between approximately 3° and approximately 9°, in particular between approximately 5° and approximately 7°.

11. Device according to one of the preceding claims, **characterized in that** the cooling plate (3) is connected to the cooling element (1) by at least one rivet (8, 10).

12. Device according to claim 11, **characterized in that** the rivet (8) is made of plastic.

13. Device according to claim 12, **characterized in that** a plurality of the rivets are formed as a single piece on a plastic rail (7).

14. Device according to claim 11, **characterized in that** the rivet (10) is made of metal, and is formed as a blind rivet in particular.

15. Device according to one of the preceding claims, **characterized in that** a groove (12) is provided on the cooling element (1) and a formation (11) corresponding to the groove is provided on the cooling plate, wherein the cooling plate (3) can be inserted in a force-fitting manner into the groove (12) by means of the formation (11).

16. Device according to claim 15, **characterized in that** additional securing through adhesive bonding or through resilient clamping is present.

17. Device according to one of the preceding claims, **characterized in that** the cooling plate is held against the cooling element under pressure by a clamping element (16).

18. Device according to claim 17, **characterized in that** the clamping element (16) is supported on a housing cage (17) connected to the cooling element, wherein in particular multiple cooling plates (3) are located in the housing cage (17).

## Revendications

1. Dispositif servant au refroidissement d'une batterie de véhicule, comprenant une pluralité d'éléments accumulateurs électriques (6) et un refroidisseur (1) pouvant être traversé par un fluide refroidissant, où au moins l'un des éléments accumulateurs électriques (6) est fixé à chaque fois en contact thermique sur au moins une tôle de refroidissement (3), et où la tôle de refroidissement (3) est assemblée avec le refroidisseur (1) pour la transmission de chaleur, de l'élément accumulateur (6) au fluide, où la tôle de refroidissement (3) présente un assemblage mécanique, sur une grande surface, avec le refroidisseur (1), **caractérisé en ce que** la tôle de refroidissement (3) présente, au niveau de son extrémité dirigée vers le refroidisseur (1), une partie en saillie (13) se rétrécissant suivant un angle plat, où la partie en saillie pénètre, en particulier en s'engageant par frottement, dans un évidement (14) correspondant du refroidisseur (1).

2. Dispositif selon la revendication 1, **caractérisé en ce que** la tôle de refroidissement (3) peut être fixée sur le refroidisseur (1), après un assemblage avec l'élément électrique (6).

3. Dispositif selon l'une ou l'autre des revendications précédentes, **caractérisé en ce que** la tôle de refroidissement (3) présente une épaisseur comprise entre 0,2 mm environ et 2 mm environ.

4. Dispositif selon l'une quelconque des revendications précédentes, **caractérisé en ce que** la tôle de refroidissement (3) comprend une pluralité de couches de tôle.

5. Dispositif selon l'une quelconque des revendications précédentes, **caractérisé en ce que** le refroidisseur (1) présente une ouverture (2), où la tôle de refroidissement (3) pénètre au moins partiellement à travers l'ouverture (2).

6. Dispositif selon la revendication 5, **caractérisé en ce qu'**une partie de la tôle de refroidissement (3) dépassant au-dessus du côté - opposé à l'élément électrique (6) - du refroidisseur (1) est déformée dans le but de réaliser l'assemblage mécanique avec le refroidisseur, obtenu en particulier par action de force et / ou par frottement et / ou par complémentarité de forme.

7. Dispositif selon la revendication 6, **caractérisé en ce que** l'assemblage mécanique se produit avec une partie en tôle (4) disposée sur le refroidisseur (1), en particulier au moyen d'une déformation commune de la tôle de refroidissement (3) et de la partie en tôle (4).

8. Dispositif selon la revendication 6, **caractérisé en ce que** la partie de la tôle de refroidissement (3), qui dépasse, est usinée directement sur le refroidisseur (1).

9. Dispositif selon la revendication 8, **caractérisé en ce que** l'ouverture du refroidisseur (1) présente une forme de fente (2a) comportant une zone centrale (2b) élargie.

10. Dispositif selon la revendication 1, **caractérisé en ce qu'**un angle d'ouverture de la partie en saillie (13) de la tôle de refroidissement (3) est compris entre 3° environ et 9° environ, en particulier entre 5° environ et 7° environ.

11. Dispositif selon l'une quelconque des revendications précédentes, **caractérisé en ce que** la tôle de refroidissement (3) est assemblée avec le refroidisseur (1), en utilisant au moins un rivet (8, 10).

12. Dispositif selon la revendication 11, **caractérisé en ce que** le rivet (8) est en matière plastique.

13. Dispositif selon la revendication 12, **caractérisé en ce que** plusieurs des rivets sont configurés en formant un ensemble unitaire intégré sur un rail en matière plastique (7).

14. Dispositif selon la revendication 11, **caractérisé en ce que** le rivet (10) est en métal et est configuré en particulier comme un rivet aveugle.

15. Dispositif selon l'une quelconque des revendications précédentes, **caractérisé en ce qu'**il est prévu, sur le refroidisseur (1), une rainure (12) et, sur la tôle de refroidissement, une partie en saillie (11) correspondant à la rainure, où la tôle de refroidissement (3) peut être introduite dans la rainure (12), par complémentarité de forme, au moyen de la partie en saillie (11).

16. Dispositif selon la revendication 15, **caractérisé en ce qu'**il existe une fixation supplémentaire réalisée par collage ou bien par serrage élastique.

17. Dispositif selon l'une quelconque des revendications précédentes, **caractérisé en ce que** la tôle de refroidissement est maintenue contre le refroidisseur sous l'effet d'une force exercée par un élément de serrage (16).

18. Dispositif selon la revendication 17, **caractérisé en ce que** l'élément de serrage (16) est supporté sur un panier à cadre (17) assemblé avec le refroidisseur, où en particulier plusieurs tôles de refroidissement (3) sont disposées dans le panier à cadre (17).
